# EUROPEAN PATENT APPLICATION

(11) **EP 1 698 801 A1**
(43) Date of publication of application: **06.09.2006**
(21) Application number: 04799709.3
(22) Date of filing: 10.11.2004
(51) Int. Cl.: F16G 5/18

(54) **POWER TRANSMISSION CHAIN, POWER TRANSMISSION DEVICE, AND METHOD OF PRODUCING THE CHAIN**

(30) Priority: 10.11.2003 JP 2003379351; 10.11.2003 JP 2003379882
(71) Applicant: JTEKT CORPORATION, Chuo-ku Osaka-shi Osaka 542-8502 (JP)
(72) Inventor: YASUHARA, Shinji, c/o JTEKT Corporation, Osaka-shi, Osaka 5420081 (JP); KAMAMOTO, Shigeo, c/o JTEKT Corporation, Osaka-shi, Osaka 5420081 (JP); FUKUI, Nobuki, c/o JTEKT Corporation, Osaka-shi, Osaka 5420081 (JP)
(74) Representative: Steinmeister, Helmut
(86) International application number: PCT/JP2004/017032
(87) International publication number: WO 2005/050055

(57) **Abstract**

A power transmission chain 1 includes a plurality of links 11 having front and back insertion parts 12, 13 into which pins are inserted, and a plurality of pins 14 and a plurality of interpieces 15 for connecting the links 11 aligned in a chain width direction so as to be bendable in a longitudinal direction such that a front insertion part 12 of one link 11 and a back insertion part 13 of another link 11 correspond to each other. Each pin 14 and each interpiece 15 are fitted and fixed to the peripheral faces of the insertion parts 12, 13 by fitting, and a difference in dimension before the fitting is 0.005mm to O.lmm.

## Description

### TECHNICAL FIELD

The present invention relates to a power transmission chain, and more particularly, to a power transmission chain preferable for a continuously variable transmission (CVT) of an automobile and a power transmission device utilizing thereof, and a manufacturing method thereof.

### BACKGROUND ART

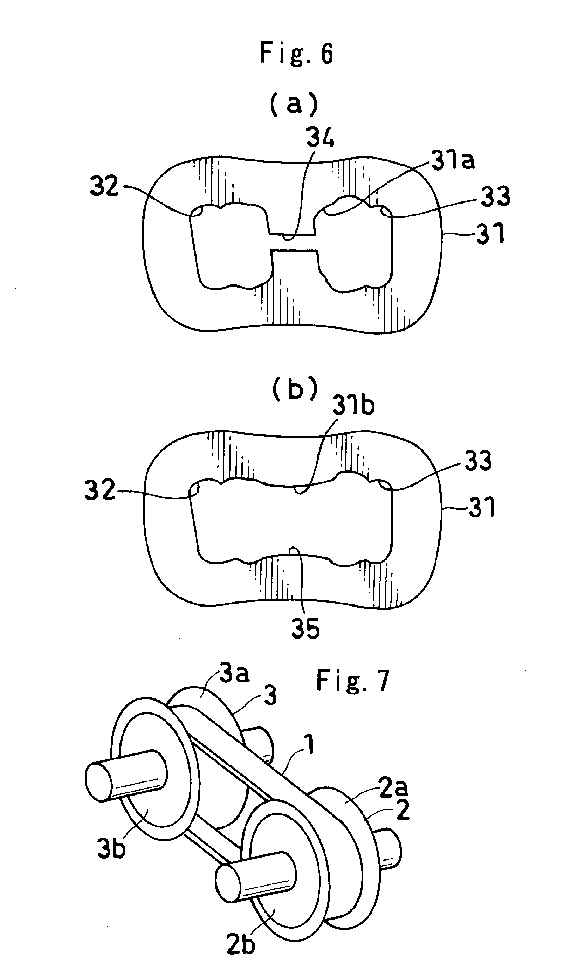

As a continuously variable transmission for an automobile, as shown in Fig. 7, there has been known one which includes: a drive pulley (2) having a fixed sheave (2a) and a movable sheave (2b) and provided on the engine side; a driven pulley (3) having a fixed sheave (3b) and a movable sheave (3a) and provided on the drive wheel side; and an endless power transmission chain (1) provided over the both, and in which the movable sheaves (2b) (3a) are caused to come close to or leave away from the fixed sheaves (2a) (3b) by a hydraulic actuator, whereby a chain (1) is clamped by a hydraulic pressure so as to cause a contact load between the pulleys (2) (3) and the chain (1) by the clamping force, and torque is transmitted by a frictional force of the contact part.

As a power transmission chain, Patent Document 1 (Publication of Japanese Patent Application Laid-open No. 8-312725) proposes one which includes: a plurality of links having front and back insertion parts into which pins are inserted; and a plurality of first pins and a plurality of seconds pins for connecting the links aligned in a chain width direction so as to be bendable in a longitudinal direction such that a front insertion part of one link corresponds to a back insertion part of another link, and in which a first pin fixed to a front insertion part of one link and movably fitted in a back insertion part of another link and a second pin movably fitted in the front insertion part of the one link and fixed to the back insertion part of the other link move relatively in a rolling contacting manner so as to enable bending in a longitudinal direction between the links. Such a chain is manufactured by mechanically pressing a link into a pin one by one, in which an end face of the pin is ground in a predetermined shape, and to fit it therein.

According to the power transmission chain of Patent Document 1, excessive tension strain may be caused locally when fitted depending on the size or shape of a link or a pin, so for a usage requiring particularly high strength, it is desirable to suppress it so as to further improve link strength. Further, according to the above-described method of manufacturing a power transmission chain, a contact surface of a pin may be damaged when fitted, so for a usage requiring particularly high strength, it is desirable to suppress it so as to improve chain strength. Further, assembling takes time since it is required to mechanically press-in a link one by one, and also an end face of a pin is processed not by forging but by grinding, so the processing cost may be relatively high.

An object of the present invention is to provide a power transmission chain and a power transmission device capable of preventing generation of excessive tension strain locally when engaging a pin and a link, and securing link strength.

Another object of the present invention is to provide a method of manufacturing a power transmission chain and a power transmission device capable of preventing a contact surface of a pin from being damaged, reducing assembling manhours, and decreasing the processing cost.

### DISCLOSURE OF THE INVENTION

A power transmission chain according to the present invention includes: a plurality of links having front and back insertion parts into which pins are inserted; and a plurality of first pins and a plurality of second pins for connecting the links aligned in a chain width direction so as to be bendable in a longitudinal direction such that a front insertion part of one link and a back insertion part of another link correspond to each other, in which a first pin fixed to a front insertion part of one link and movably fitted in a back insertion part of another link and a second pin movably fitted in the front insertion part of the one link and fixed to the back insertion part of the other link move relatively in a rolling contacting manner so as to enable bending in a longitudinal direction between the links. Fixing of the pins to the front and back insertion parts are performed by fitting through mechanical press-in, shrink-fitting or cool-fitting, and at least one of the following conditions is satisfied: a condition that a difference in dimension is 0.005mm to 0.1mm; a condition that the maximum tensile stress in the periphery of the insertion part after fitting is not more than 1000MPa; and a condition that stress in the periphery of the insertion part after fitting is 3 to 80% of stress in the elastic modification limit.

A "difference in dimension" at the time of mechanical press-in is same as a press-in margin, and a "difference in dimension" at the time of shrink-fitting or cool-fitting means a difference in dimension (shrink range) before starting shrink-fitting or cool-fitting (when in the room temperature).

For example, there is a case where fitting is performed by mechanical press-in and a press-in margin is 0.005mm to 0.1mm, or a case where fitting is performed by mechanical press-in and the maximum tensile stress in the periphery of the insertion part after the press-in is not more than 1000MPa, or a case where fitting is performed by mechanical press-in and the stress in the periphery of the insertion part after the press-in is 3 to 80% of the stress in the elastic modification limit. Further, there is a case where fitting is performed by shrink-fitting and the difference in dimension between the pin and the insertion part before starting the shrink-fitting is 0.005mm to 0.1mm, or a case where fitting is performed by shrink-fitting and the maximum tensile stress in the periphery of the insertion part after the shrink-fitting has been completed is not more than 1000MPa, or a case where fitting is performed by shrink-fitting and the stress in the periphery of the insertion part after the shrink-fitting has been completed is 3 to 80% of the stress in the elastic deformation limit. Further, there is a case where fitting is performed by cool-fitting and the difference in dimension between the pin and the insertion part before starting the cool-fitting is 0.005mm to 0.1mm, or a case where fitting is performed by cool-fitting and the maximum tensile stress in the periphery of the insertion part after the cool-fitting has been completed is not more than 1000MPa, or a case where fitting is performed by cool-fitting and the stress in the periphery of the insertion part after the cool-fitting has been completed is 3 to 80% of the stress in the elastic deformation limit.

A link is made of spring steel, for example. However, the material of a link is not limited to spring steel, and it may be other steel such as bearing steel, of course. As the material of a pin, appropriate steel such as bearing steel is used.

The locus of a contact position of pins moving relatively in a rolling-contact manner is, for example, an involute curve of a circle, but it is not limited to this and may be a curve similar to an involute curve of a circle. In order to make the locus of a contact position to be an involute curve of a circle, for example, it is only necessary that a contact surface of one pin has an involute shape having a basic circle of radius Rb and center M in a section, and a contact surface of another pin is flat (sectional shape is a line). The locus of a contact position of pins may be an involute curve of a circle even when the both contact surfaces of the pins are curved surfaces. In this case, it is preferable that the sectional shapes of both pins are the same.

One of the first pin and the second pin is a pin which contacts a pulley when the chain is used in a continuously variable transmission (hereinafter referred to as "pin"), and the other one is a pin not contacting the pulley (called interpiece or strip, hereinafter referred to as "interpiece").

A front insertion part of a link includes a pin fixing part to which a pin is fixed and an interpiece movable part in which an interpiece is movably fitted, and a back insertion part of a link includes a pin movable part in which a pin is movably fitted and an interpiece fixing part to which an interpiece is fixed. Front and back insertion parts may be formed such that front and back through holes separated from each other are formed in a link, in which the front through hole is the front insertion part and the back through hole is the back insertion part. Alternatively, a through hole elongated in front and back may be formed in a link, in which the front part of the through hole is the front insertion part and the back part of the through hole is the back insertion part.

Although, in the present specification, one end side in a longitudinal direction of a link is front and the other end side is back, these front and back are for convenience, and it does not mean the longitudinal direction of a link always coincides with a front and back direction.

In one insertion part, both of a pin and an interpiece are fitted so as to face a longitudinal direction of the chain, and either of them is fitted and fixed to the peripheral face of the insertion part of the link. The fitting and fixing are performed on edges (upper and lower edges) of a part orthogonal to the longitudinal direction of the insertion part. Conventionally, fitting conditions for the power transmission chain have not been considered, so strength reliability of the link has not been sufficient. However, by setting appropriate fitting conditions, it is possible to improve the strength reliability of the link. Fitting and fixing may be performed by any one of mechanical press-in, shrink-fitting and cool-fitting. Of course, the fitting conditions may define a difference in dimension (a half of the result of subtracting the up-and-down height of an insertion part from the up-and-down height of a pin or an interpiece), but by paying attention to stress, it is also possible to prevent the excessive tensile stress caused locally by making the maximum tensile stress to be predetermined stress or less or by assuring modification within the elastic limit. It is also achieved by defining a difference in dimension as well as defining stress in the periphery of the insertion part.

According to the power transmission chain of the present invention, it is possible to prevent excessive tensile stress from being caused locally when fitting, and to ensure strength of the links.

The power transmission chain described above is preferably so formed that one pin (interpiece) is shorter than the other pin (pin), and the end faces of the longer pin contact conical sheave faces of a pulley for a continuously variable transmission whereby power is transmitted by a frictional force caused by a contact thereof. Each pulley includes a fixing sheave having a conical sheave face and a movable sheave having a conical sheave face facing the sheave face of the fixing sheave, and a chain is interposed between the sheave faces of the both sheaves, and by moving the movable sheave by a hydraulic actuator, a winding radius of the chain varies corresponding to the distance between the sheave faces of the continuously variable transmission, whereby variable transmission can be performed continuously with smooth movement.

A power transmission device according to the present invention is one comprising: a first pulley having a sheave face of a conical surface shape; a second pulley having a sheave face of a conical surface shape; and a power transmission chain provided over the first pulley and the second pulley, in which the power transmission chain is any of the ones described above.

This power transmission device is preferable to be used as a continuously variable transmission of an automobile.

A method of manufacturing a power transmission chain according to the present invention is a method of manufacturing a power transmission chain including: a plurality of links having front and back insertion parts into which pins are inserted; and a plurality of pins for connecting the links aligned in a chain width direction so as to be bendable in a longitudinal direction such that a front insertion part of one link and a back insertion part of another link correspond to each other, in which a pin is fixed to a front insertion part of one link and movably fitted in a back insertion part of another link so as to enable bending in a longitudinal direction between the links, and the method is characterized in fixing each pin to the peripheral face of the insertion part of each link by shrink-fitting or cool-fitting.

It is preferable that the plurality of pins include a first pin which is fixed to a front insertion part of one link and movably fitted in a back insertion part of another link, and a second pin which is movably fitted in the front insertion part of the one link and fixed to the back insertion part of the other link, and the power transmission chain be one in which the first pin and the second pin move relatively in a rolling contacting manner.

According to the method of manufacturing the power transmission chain of the present invention, a damage to be caused on a contact surface of pins when fitted is prevented. Further, since it is possible to insert pins into insertion parts in a state where links are laminated, assembling manhours can be reduced, and further the processing cost can be also reduced since end faces of pins can be processed not by forging but by grinding.

Shrink-fitting or cool-fitting is performed in a state where a plurality of links are aligned at predetermined intervals in a longitudinal direction, endlessly for example, and are laminated in a plurality of lows, by inserting pins into insertion parts of all links aligned in a row direction. In the case where the link is made of spring steel, tempering temperature is high, so shrink-fitting at a high temperature is possible.

The end face shape of each pin (pin and interface) may be processed by grinding of course, but it may also be processed by forging. In forging, the diameter of an end face tends to be larger than other parts, so after shrink-fitting or cool-fitting has been completed, a pin and an interpiece are not subject to being fallen off, whereby reliability is further improved. Further, if the both ends have large diameters, mechanical press-in becomes more difficult, and an effect achieved by shrink-fitting or cool-fitting becomes larger. In addition, by using forging instead of grinding, the processing cost can be also reduced.

In the method of manufacturing a power transmission chain according to the present invention, it is preferable that shrink-fitting or cool-fitting be performed in a state where links are laminated in a plurality of rows. It is appropriate that the number of rows of links is five or more. Further, not only both end parts of a pin or an interpiece and links arranged on the both edges in a row direction are fixed by shrink-fitting or cool-fitting, but also all links aligned in a row direction in which the front and back insertion parts are provided at a same position are fixed to pins or interpieces.

Further, it is preferable that shapes of end faces of pins and interpieces be formed by forging. Since it is required to cause a high load and a high frictional force in order to transmit torque (power) by a frictional force by contacting each sheave of a pulley with end faces of a pin, end faces of a pin must be in a predetermined shape. By forming them by forging, it is possible to reduce cost compared with the case of grinding.

The power transmission chain manufactured by the above-described manufacturing method is preferably one in which end faces of a pin contact conical sheave faces of a pulley of a continuously variable transmission and power is transmitted by a frictional force caused by this contact. Each pulley includes a fixing sheave having a conical sheave face and a movable sheave having a conical sheave face facing the sheave face of the fixing sheave, and a chain is interposed between the sheave faces of the both sheaves. By moving the movable sheave by a hydraulic actuator, a winding radius of the chain varies corresponding to the distance between the sheave faces of a continuously variable transmission, whereby variable transmission is performed continuously with smooth movement. A structure formed of a pair of pulleys and a power transmission chain obtained in this manner becomes preferable for use as a continuously variable transmission of an automobile.

### BRIEF DESCRIPTION OF THE DRAWINGS

Fig. 1 is a diagram showing a part of a power transmission chain manufactured according to the present invention.
Fig. 2 is an enlarged perspective view of the same.
Fig. 3 is an enlarged side view of the same.
Fig. 4 is a front view in which a power transmission chain is mounted to a pulley.
Fig. 5 is a diagram schematically showing a method of manufacturing a power transmission chain according to the present invention.
Fig. 6 is a diagram showing an embodiment of a different link shape of a power transmission chain according to the present invention.
Fig. 7 is a perspective view showing an example of a continuously variable transmission in which a power transmission chain according to the present invention is used.

### BEST MODE FOR CARRYING OUT THE INVENTION

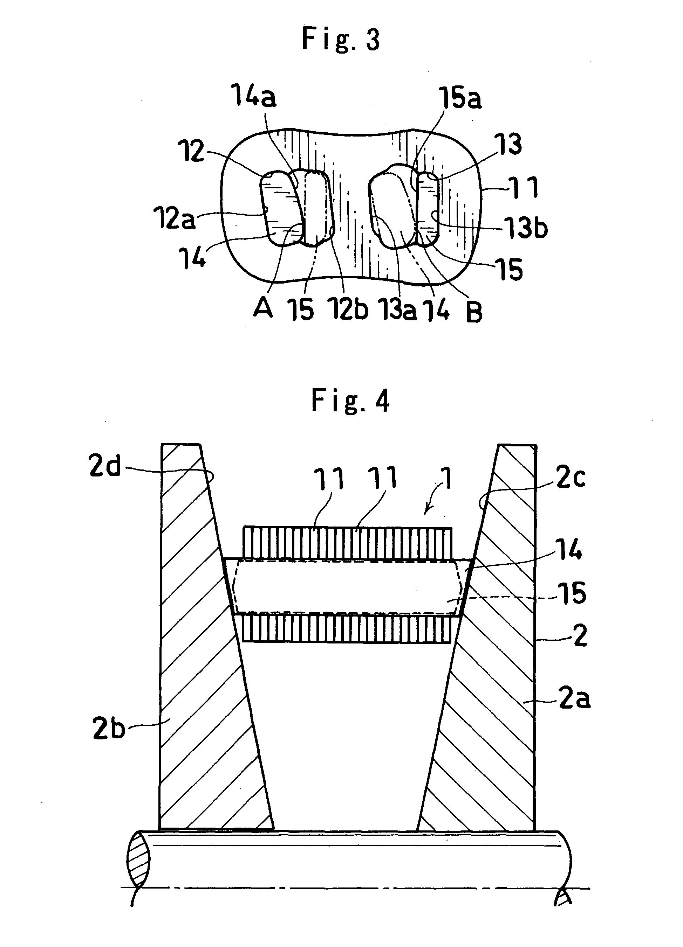

Hereinafter, an embodiment of the present invention will be explained with reference to the drawings. In the following explanation, up and down means up and down in Fig. 3.

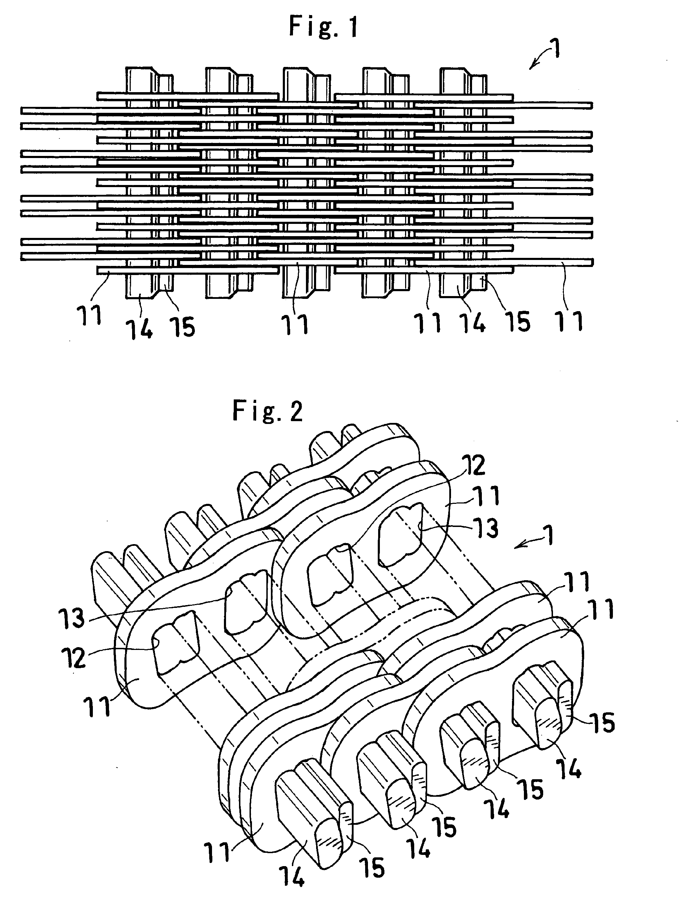

Figs. 1 and 2 show a part of a power transmission chain manufactured according to the present invention. A power transmission chain (1) includes: a plurality of links (11) having front and back insertion parts (12) (13) provided with predetermined intervals in a chain length direction; and a plurality of pins (first pins) (14) and interpieces (second pins) (15) for connecting the links (11) aligned in a chain width direction so as to be bendable in a longitudinal direction (chain length direction).

As shown in Fig. 3, the front insertion part (12) includes a pin fixing part (12a) to which a pin (14) (shown by a continuous line) is fixed and an interpiece movable part (12b) in which an interpiece (15) (shown by an alternate long and two short dashes line) is movably fitted, and the back insertion part (13) includes a pin movable part (13a) in which a pin (14) (shown by an alternate long and two short dashes line) is movably fitted and an interpiece fixing part (13b) to which an interpiece (15) (shown by a continuous line) is fixed. In connecting the links (11) aligned in a chain width direction, links (11) are overlapped with each other such that the front insertion part (12) of one link (11) and the back insertion part (13) of another link (11) correspond to each other, the pin (14) is fixed to the front insertion part (12) of one link (11) and is movably fitted in the back insertion part (13) of another link (11), and the interpiece (15) is movably fitted in the front insertion part (12) of one link (11) as well as is fixed to the back insertion part (13) of another link (11). Then, the pin (14) and the interpiece (15) move relatively in a rolling contacting manner so as to enable bending in a longitudinal direction (front and back direction) of the links (11).

The locus of a contact position of the pin (14) and the interpiece (15), based on the pin (14), is an involute of a circle. In this embodiment, a contact surface (14a) of the pin (14) has an involute shape having a basic circle of radius Rb and center M in a section, and a contact surface (15a) of the interpiece (15) is flat (sectional shape is a line). Thereby, when each link (11) moves from the linear part to the circular part or moves from the circular part to the linear part of the chain (1), in the front insertion part (12), the interpiece (15) moves such that the contact surface (15a) thereof (including a slight sliding contact) rolling-contacts the contact surface (14a) of the pin (14) with respect to the fixed pin (14) in the interpiece movable part (12b), and in the back insertion part (13), the pin (14) moves, in the pin movable part (13a), such that the contact surface (14a) thereof rolling-contacts (including a slight sliding contact)the contact surface (15a) of the interpiece (15) with respect to the fixed interpiece (15). In Fig. 3, the parts indicated by the reference marks A and B are lines (points in the section) where the pin (14) and the interpiece (15) contact with each other in the linear part of the chain (1), and the distance between A and B is a pitch.

Fixing of the pin (14) to the pin fixing part (12a) of the front insertion part (12) and fixing of the interpiece (15) to the interpiece fixing part (13b) of the back insertion part (13) are performed by fitting between upper and lower edges of the pin (14) and the interpiece (15) and upper and lower edges of the pin fixing part (12a) and the interpiece fixing part (13b). At this time, there may be a possibility that excessive tensile stress is caused locally so as to reduce the strength of the link (11). Therefore, shapes of the insertion parts (12) (13) are determined so as to satisfy any one of the following conditions.
1. A difference in dimension is set to 0.005 to 0.1mm.
2. The maximum,tensile stress to be caused is set to not more than 1000MPa.
3. Stress is set to 3 to 80% of yield stress. Here, yield stress is stress in the elastic deformation limit by the time plastic deformation starts in a stress-distortion curve.

The three conditions described above are applicable in any fitting of mechanical press-in, shrink-fitting or cooling-fitting. Note that a difference in dimension is more preferably 0.005 to 0.04mm.

The power transmission chain (1) is used in a CVT shown in Fig. 7. In such a case, the interpiece (15) is set to be shorter than the pin (14), and end faces of the pin (14) contact the conical sheave faces (2c) (2d) of the pulley (2) in a state where end faces of the interpiece (15) do not contact respective conical sheave faces (2c) (2d) of the fixed sheave (2a) and the movable sheave (2b) of the pulley (2), whereby power is transmitted by a frictional force caused by this contact. Since the pin (14) and the interpiece (15) move in a rolling contacting manner as described above, the pin (14) almost does not rotate with respect to the sheave faces (2c) (2d) of the pulley (2), whereby frictional loss is reduced and high power transmission rate is secured.

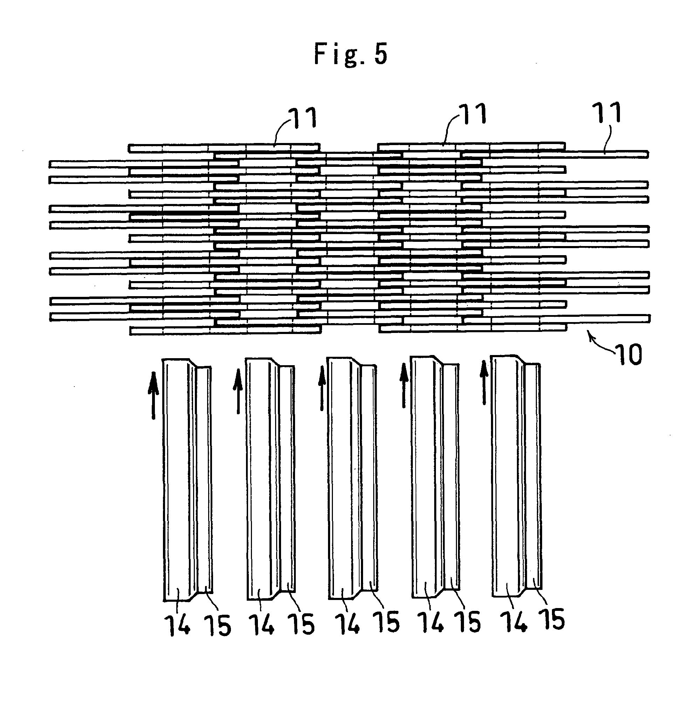

A method of manufacturing a power transmission chain according to the present invention is a manufacturing method preferable for manufacturing the above-described power transmission chain (1), in which the pin (14) and the interpiece (15) are fixed to the peripheral faces of the insertion parts (12) (13) by shrink-fitting. The pin (14) having slightly larger up-and-down dimension than the up-and-down dimension of the pin fixing part (12a) of the front insertion part (12), and the interpiece (15) having slightly larger up-and-down dimension than the up-and-down dimension of the interpiece fixing part (13b) of the back insertion part (13) are prepared, and a plurality of links (11), which are heated to a high temperature so that the insertion parts (12) (13) are heated and expanded, are aligned endlessly or linearly (Fig. 5 only shows a part thereof) at predetermined intervals in a longitudinal direction as shown in Fig. 5, and are laminated in a plural rows to thereby form a laminated body (10) of high temperature links. In this state, the pins (14) and the interpieces (15) are inserted one by one in the corresponding insertion parts (12) (13) so as to be fitted, or all of the pins (14) and the interpieces (15) are inserted into the respective corresponding insertion parts (12) (13) collectively. Then, by a contracting force due to cooling of the laminated body (10) of high temperature links, the pins (14) and the interpieces (15) are fixedly adhered with all links (11) aligned in a row direction, in which the front and back insertion parts (12) (13) are at the same positions. The sectional shapes of the pin (14) and the interpiece (15) may be different or the same, of course. Further, one kind of pins are used in this manufacturing method, and the pin is fixed to the front insertion part of one link and movably fitted in the back insertion part of the other link, thereby it is applicable to a power transmission chain known as enabling bending in a longitudinal direction between the links.

The end faces of the pin (14) and the interpiece (15) are formed by forging, whereby the shapes are formed such that the end face diameters of the pin (14) and the interpiece (15) become slightly larger than other parts. However, it does not constitute an obstacle for shrink-fitting, but the pin (14) and the interpiece (15) will not be easily fallen off due to their end faces of large diameters after the shrink-fitting is completed, whereby reliability is improved Further, by using forging instead of grinding, the processing cost can be reduced.

Although, in the manufacturing method described above, the pin (14) and the interpiece (15) are fixed to the peripheral faces of the insertion parts (12) (13) by shrink-fitting, a same effect can be achieved by "cool-fitting", instead of "shrink-fitting", in which the pin (14) and the interpiece (15) are cooled to be contracted and are fitted to the peripheral face of the insertion parts (12) (13) and then the pin (14) and the interpiece (15) are warmed to the room temperature so as to be fixed.

Further, in each of the embodiments described above, the front insertion part (12) and the back insertion part (13) are respectively independent through holes, but through holes for obtaining the insertion parts (12) (13) may have shapes shown in Figs. 6(a) and 6(b) in order to ease stress concentration of the hole edges. In Fig. 6(a), a link (31) has a through hole (31a) elongated in front and back, and the front part of the through hole (31a) is the front insertion part (32) and the back part of the through hole (31a) is the back insertion part (33). The through hole (31a) is in a shape in which the front and back insertion parts (12) (13) shown in Fig. 3 are communicated via a communication part (34), and the shapes of the front and back insertion parts (32) (33) shown in Fig. 6(a) are the same as those of the front and back insertion parts (12) (13) shown in Fig. 3. Therefore, by combining them with the pins (14) and the interpieces (15) shown in Fig. 3, there is obtained a same power transmission chain as each embodiment of the above-described power transmission chain (1). The height of the communication part (34) may be the height of about a several fractions of the height of the insertion parts (32) (33) for example, and as shown in Fig. 6(b), a height close to the height of the insertion parts (32) (33) is acceptable within a range not adversely affecting the movement of the pins. In Fig. 6(b), the link (31) has a through hole (31b) elongated in front and back, and the front part of the through hole (31b) is the front insertion hole (32), and the back part of the through hole (31b) is the back insertion part (33). The through hole (31b) is in a shape in which the front and back insertion parts (12) (13) are communicated via a communication part (35) as shown in Fig. 3, and the shapes of the front and back insertion parts (32) (33) shown in Fig. 6(b) are the same as the shape of the front and back insertion parts (12) (13) shown in Fig. 3. Therefore, by combining the pin (14) and the interpiece (15) shown in Fig. 3, a same power transmission chain as the above-described power transmission chain (1) of each embodiment is obtained.

Further, in the manufacturing method described above, when an edge is formed on the outer peripheral part of end faces of the pin (14), fitting operation becomes difficult and it is hard to be automated. Therefore, a pin processing method in which drawing, cutting, press R formation and heat treatment are performed in this order or a pin processing method in which drawing, cutting, heat treatment and barrel processing are performed in this order may be adopted instead of a pin processing method in which drawing, cutting and heat treatment are performed in this order.

### INDUSTRIAL APPLICABILITY

The power transmission chain according to the present invention suppresses polygonal vibration and prevents excessive tension stress from being caused locally. Therefore, when this is applied to a power transmission device of an automobile such as a continuously variable transmission, it is possible to enhance quietness of the automobile and to improve comfort as well as durability.

## Claims

1. A power transmission chain including; a plurality of links having front and back insertion parts into which pins are inserted; and a plurality of first pins and a plurality of second pins for connecting the links aligned in a chain width direction so as to be bendable in a longitudinal direction such that a front insertion part of one link and a back insertion part of another link correspond to each other, in which a first pin fixed to a front insertion part of one link and movably fitted in a back insertion part of another link and a second pin movably fitted in the front insertion part of the one link and fixed to the back insertion part of the other link move relatively in a rolling contacting manner so as to enable bending in a longitudinal direction between the links, wherein
fixing of pins to the front and back insertion parts are performed by fitting by mechanical press-in, shrink-fitting or cool-fitting, and at least one of following conditions is satisfied; a condition that a difference in dimension is 0.005mm to 0.1mm; a condition that maximum tensile stress in a periphery of the insertion part after fitting is not more than 1000MPa; and stress in the periphery of the insertion part after fitting is 3 to 80% of stress in an elastic modification limit.

2. The power transmission chain as claimed in claim 1, wherein the fitting is performed by mechanical press-in, and a press-in margin is 0.005mm to 0.1mm.

3. The power transmission chain as claimed in claim 1, wherein the fitting is performed by mechanical press-in, and the maximum tensile stress in the periphery of the insertion part after press-in is not more than 1000MPa.

4. The power transmission chain as claimed in claim 1, wherein the fitting is performed by mechanical press-in, and the stress in the periphery of the insertion part after press-in is 3 to 80% of the stress in the elastic modification limit.

5. The power transmission chain as claimed in claim 1, wherein the fitting is performed by shrink-fitting, and a difference in dimension between the pin and the insertion part before starting shrink-fitting is 0.005mm to 0.1mm.

6. The power transmission chain as claimed in claim 1, wherein the fitting is performed by shrink-fitting, and the maximum tensile stress in the periphery of the insertion part after completing shrink-fitting is not more than 1000MPa.

7. The power transmission chain as claimed in claim 1, wherein the fitting is performed by shrink-fitting, and the stress in the periphery of the insertion part after completing shrink-fitting is 3 to 80% of the stress in the elastic deformation limit.

8. The power transmission chain as claimed in claim 1, wherein the fitting is performed by cool-fitting, and a difference in dimension between the pin and the insertion part before starting the cool-fitting is 0.005mm to 0.1mm.

9. The power transmission chain as claimed in claim 1, wherein the fitting is performed by cool-fitting, and the maximum tensile stress in the periphery of the insertion part after completing cool-fitting is not more than 1000MPa.

10. The power transmission chain as claimed in claim 1, wherein the fitting is performed by cool-fitting, and the stress in the periphery of the insertion part after completing cool-fitting is 3 to 80% of the stress in the elastic deformation limit.

11. A power transmission device comprising; a first pulley including a sheave face in a conical surface shape; a second pulley including a sheave face in a conical surface shape; and a power transmission chain provided over the first pulley and the second pulley, wherein the power transmission chain is according to any one of claims 1 to 10.

12. A method of manufacturing a power transmission chain including; a plurality of links having front and back insertion parts into which pins are inserted; and a plurality of pins for connecting the links aligned in a chain width direction so as to be bendable in a longitudinal direction such that a front insertion part of one link and a back insertion part of another link correspond to each other, in which a pin is fixed to a front insertion part of one link and movably fitted in a back insertion part of another link so as to enable bending in a longitudinal direction between the links, the method is **characterized in** fixing a respective pin to a peripheral face of the insertion part of a respective link by shrink-fitting or cool-fitting.

13. The method of manufacturing the power transmission chain as claimed in claim 12, wherein the plurality of pins include a first pin fixed to a front insertion part of one link and movably fitted in a back insertion part of another link and a second pin movably fitted in the front insertion part of the one link and fixed to the back insertion part of the other link, and the power transmission chain is one in which the first pin and the second pin move relatively in a rolling contacting manner.

14. The method of manufacturing the power transmission chain as claimed in claim 12, wherein shrink-fitting or cool-fitting is performed in a state where the plurality of links are aligned at predetermined intervals in a longitudinal direction and are laminated in a plurality of lows.

15. The method of manufacturing the power transmission chain as claimed in claim 12, wherein a shape of an end face of a respective pin is formed by forging.

16. The method of manufacturing the power transmission chain as claimed in any one of claims 12 to 15, wherein the power transmission chain is so formed that one of the first pin and the second pin is shorter than the other, and end faces of a longer pin contact conical sheave faces of a pulley for a continuously variable transmission comprising a fixing sheave including a conical sheave face and a movable sheave including a conical sheave face facing the sheave face of the fixing sheave, and power is transmitted by a frictional force caused by a contact thereof.
